# EUROPEAN PATENT SPECIFICATION

(11) **EP 4 538 180 B1**
(45) Date of publication and mention of the grant of the patent: **14.10.2026**
(21) Application number: 25160389.0
(22) Date of filing: 01.11.2021
(51) Int. Cl.: B64D 29/02, B64D 27/12

(54) **GAS TURBINE ENGINE MOUNTED ABOVE WING AND WITH CAMBER**
GASTURBINENMOTOR, DER ÜBER EINEM FLÜGEL MONTIERT IST UND EINE WÖLBUNG AUFWEIST
MOTEUR À TURBINE À GAZ MONTÉ AU-DESSUS DE L'AILE ET PRÉSENTANT UNE CAMBRURE

(30) Priority: 30.10.2020 US 202017085184
(43) Date of publication of application: 16.04.2025
(62) Document number(s) of the earlier application(s) in accordance with Art. 76 EPC: 21205765.7 / 3 992 084
(73) Proprietor: RTX Corporation, Farmington, CT 06032 (US)
(72) Inventor: MALECKI, Robert E., Storrs, 06268 (US); HAHN, Andrew, Yorktown, 23693 (US); MULDOON, Marc J., Marlborough, 06447 (US); STAUBACH, Joseph B., Colchester, 06415 (US); CHANDLER, Jesse M., South Windsor, 06074 (US)
(74) Representative: Dehns

(56) References cited:
- EP-A1- 3 597 542
- EP-A2- 2 204 568
- GB-A- 585 443
- US-A- 4 044 973
- US-A1- 2003 102 405
- US-A1- 2004 140 397
- US-A1- 2009 057 493
- US-B2- 7 883 052

## Description

### BACKGROUND

This application relates to improvements in gas turbine engines to be mounted above a wing in an aircraft.

Gas turbine engines are known to power aircraft. In a gas turbine engine, a fan delivers air into a bypass duct as propulsion air, and also into a compressor. The compressor compresses the air and delivers it into a combustor and is mixed with fuel and ignited. Products of the combustion pass downstream over turbine rotors, driving them to rotate. The turbine rotors in turn drive the fan and compressor rotors.

A core housing surrounds the compressor, combustor and turbine sections. A nacelle is spaced radially outwardly of the core housing and the fan to define the bypass duct.

Historically gas turbine engines have been mounted to the underside of the wings, or to the fuselage of the aircraft. It has also been proposed to mount gas turbine engines above the wing of an aircraft.

EP-2204568-A2 discloses a gas turbine engine with an ejector and US-2009/057493-A1 discloses a noise-shielding wing configuration.

### SUMMARY

The present invention provides a gas turbine engine and engine mount structure as set forth in claim 1.

Some embodiments of the present inventions are set forth in the dependent claims.

These and other features can be best understood from the following specification and drawings, the following which is a brief description.

### BRIEF DESCRIPTION OF THE DRAWINGS

Figure 1A shows a standard gas turbine engine.
Figure 1B is a plan view of an aircraft with engines mounted above the wings.
Figure 1C is a side view of the Figure 1B engine.
Figure 2A shows a first feature of a gas turbine engine.
Figure 2B shows another feature.
Figure 2C is similar to Figure 2B but showing a distinct embodiment.
Figure 3A shows yet another feature.
Figure 3B shows the Figure 3A and the engine in a maintenance position.
Figure 3C shows maintenance work.
Figure 3D shows features of the engine.
Figure 3E shows yet another feature.
Figure 4 illustrates other details.
Figure 5 illustrates further details.

### DETAILED DESCRIPTION

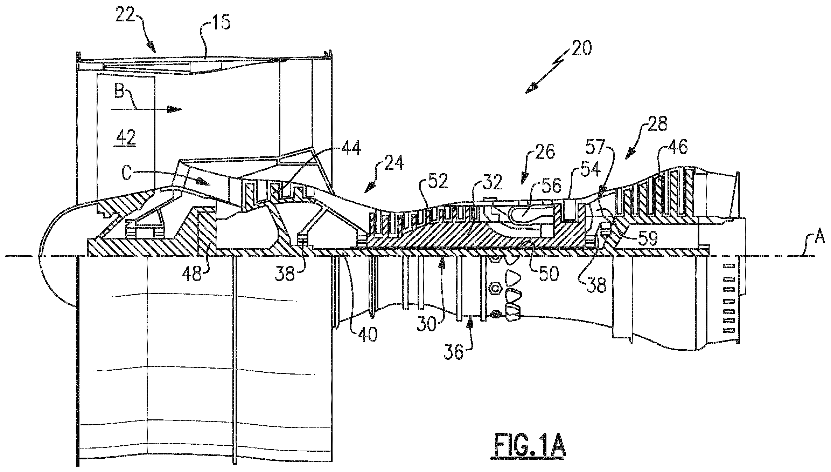

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

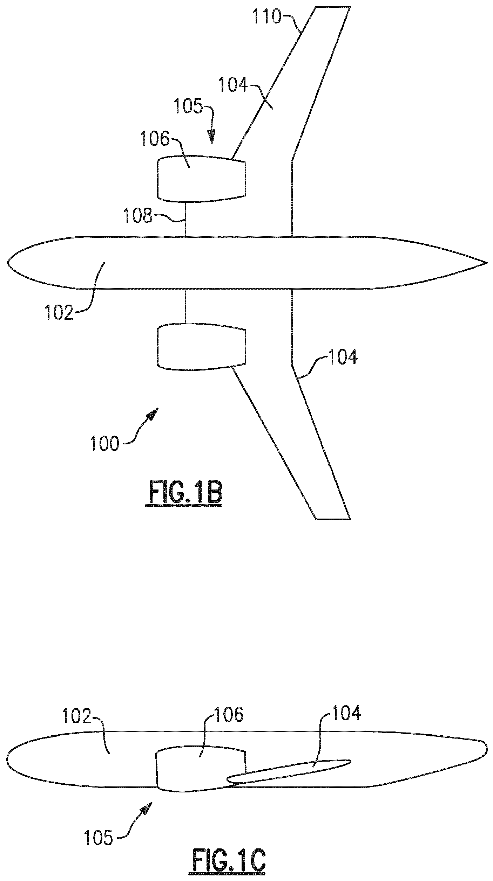

Figure 1B shows an aircraft 100 having a fuselage 102 and wings 104. Engines 105 are mounted above the wings 104. A nacelle 106 provides the outer surface of the engines 105, as known. The engines 105 may be similar to the engine shown in Figure 1A, or could be direct drive engines.

The wings 104 include a relatively straight section 108 extending between the fuselage 102 and the nacelle 106 and a swept wing portion 110 which is laterally outward of the engine 105.

Figure 1C shows the wings 104, engine 105 and fuselage 102 from the side.

The prior art engines mounted underneath the wing are constrained by ground clearance. Recently gas turbine engines are being provided with higher bypass ratios. However, this typically requires a larger nacelle such that the bypass duct can be larger. The ground clearance constraint limits the amount of increase of the bypass ratio. An over wing mount provides relief from this constraint, and also provides potential fuel burn and noise benefits. Further, there is less drag than an under wing installation.

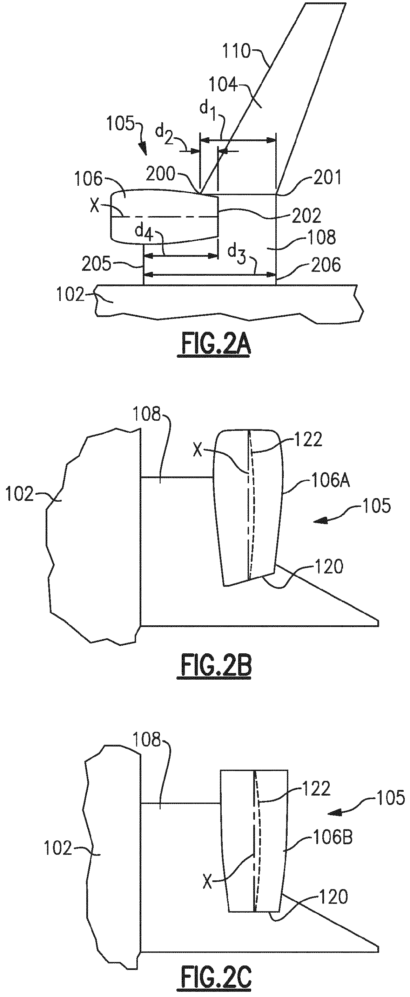

Figure 2A shows details of the engine 105. The swept wing portion 110 has a chord distance defined parallel to an axis of rotation X of the engine 105 between a leading edge 200 and a trailing edge 201 of the swept wing portion 110. This chord is labeled d₁ as is measured at a location where the swept wing portion begins, immediately outward of nacelle 106. A second length d₂ is defined between the leading edge 200 and a trailing edge 202 of nacelle 106.

A chord length d₃ is defined between a leading edge 205 and a trailing edge 206 of the straight section 108 of the wing 104. A fourth distance d₄ is defined between the leading edge 205 of the straight section 108 of the wing and the trailing edge 202 of the nacelle. All of these distances are measured parallel to the axis of rotation of the engine 105.

In an embodiment, a ratio of d₂ to d₁ is greater than or equal to 10% and less than or equal to 50%, and in embodiments greater than or equal to 10% and less than or equal to 33% and in one embodiment 33%.

A ratio of d₄ to d₃ is less than or equal to 75% and greater than or equal to 5%, and in embodiments less than or equal to 65% and greater than or equal to 5%, and in other embodiments less than or equal to 50% and greater than or equal to 5%, and in one embodiment 50%.

Figure 2B shows an engine 105 having the nacelle 106a. The trailing edge 120 has "scarf" or is at a non-perpendicular angle relative to an axis of rotation X of the engine 105 within the nacelle 106a. The scarf may be found in a view looking downwardly of a nacelle, and from the side. It is essentially a degree of freedom that allows fine tuning of a wing nacelle exhaust interaction. Essentially, it allows fine tuning of the inboard nacelle wall linked to interact with the inboard part of the wing independently of the outboard nacelle wall interaction with the outboard wing. It also provides control of an exhaust plume with regard to both inboard and outboard wing flow fields. The nacelle 106a is provided with camber 122. Essentially camber means that a center point of the nacelle 106a is not formed on a straight line parallel relative to the axis of rotation X of the gas turbine engine 105, in a plane which is parallel to the horizontal, and extending through the axis of rotation X. As can be appreciated, the line of camber 122 extends away from the fuselage 102. While the line of camber 122 is shown as a simple curve in this Figure and in practice it may be much more complex. In one example the line of camber may be similar to those of super critical airfoils.

Figure 2C shows a nacelle 106b also having camber 122. Nacelle 106b does not have scarf, or zero scarf, but rather has its trailing edge 120 being perpendicular to the axis of rotation X.

The camber shape improves wing leading edge suction through the rapid acceleration of the airflow, terminating in a shock wave in the forward portion of the wing. A symmetric nacelle would create a shock system that reduces lift and drag benefits of leading edge suction on both the straight section 108 and swept section 110. Cambering the nacelle 106 tailors the shock structure on the wing, making the net effect beneficial.

Nacelle camber enables a beneficial drag reduction in a transonic speed regime. This provides benefits to an over wing mount of an engine.

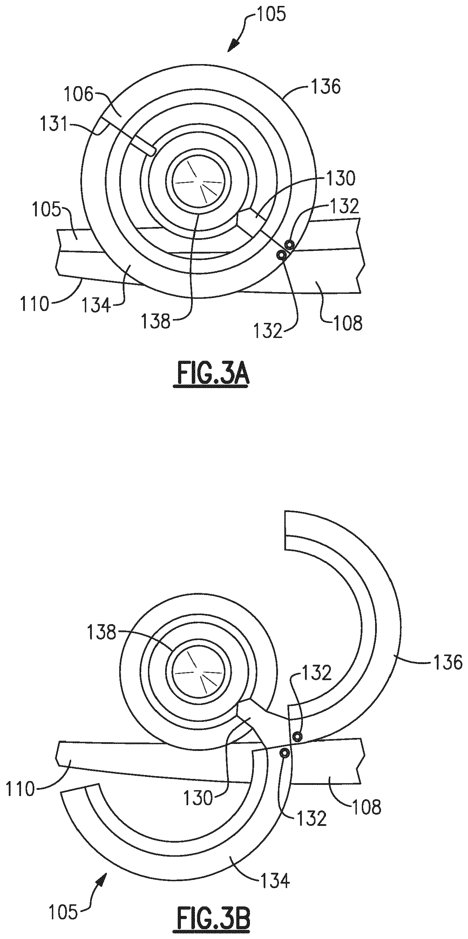

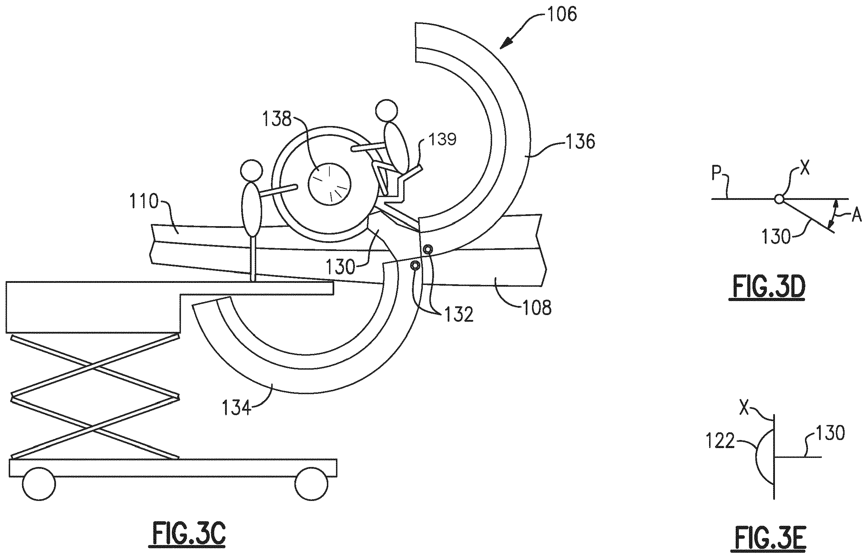

Figure 3A shows an engine 105 having an engine mount structure 130 for mounting to the straight wing portion 108. A core engine 138 is shown within the nacelle 106. The nacelle 106 is shown to have a separation line 131 and pivot axes 132. It should be understood that the forward most portion of the nacelle 106 would not necessarily have the separation line 131, and one might not be able to see the pivot axes 132. However, the view of Figure 3 is shown to illustrate D-doors 134 and 136. The pivot axes 132 are associated with engine mount structure 130.

As shown in Figure 3B, since the engine mount structure 130 is at an angle which is non-vertical, so that when the D-doors 134 and 136 are open there will be easier access to the interior of the engine, than if the engine mount structure extended vertically.

This is illustrated in Figure 3C where maintenance work is occurring to the engine 138. Notably, a maintenance support attachment 139 is provided that may function as a step or seat for a maintenance worker.

In an engine mounted beneath the wing, the engine mount structure would typically extend vertically to connect the engine to the wing. The D-doors can pivot to open upwardly, allowing maintenance access from underneath the wing. However, applicant has recognized an engine mounted through a vertically extending engine mount structure above the wing would have the D-doors open in a way where one could not gain access to the engine.

In addition, the angled engine mount structure reduces engine mount structure weight, and reduces the structure required to connect the engine to the wing.

Figure 3D schematically shows a feature of the engine mount structure 130 relative to the axis of rotation X of the core engine 138. A first plane P could be defined which extends through the axis of rotation X. This plane P would be parallel to the horizontal when the engine is mounted on an aircraft.

The engine mount structure 130 extends vertically downwardly from the plane P and laterally outwardly of the axis of rotation X, and defines an angle A relative to the first plane P. Angle A may be in a range of 30 to 50 degrees.. That is, the angle A could be said to be non-parallel and non-perpendicular to the plane P.

Figure 3E shows that relative to the axis of rotation X, the line of camber 122 is curved laterally away in an opposed direction to the lateral extension direction of the engine mount structure 130.

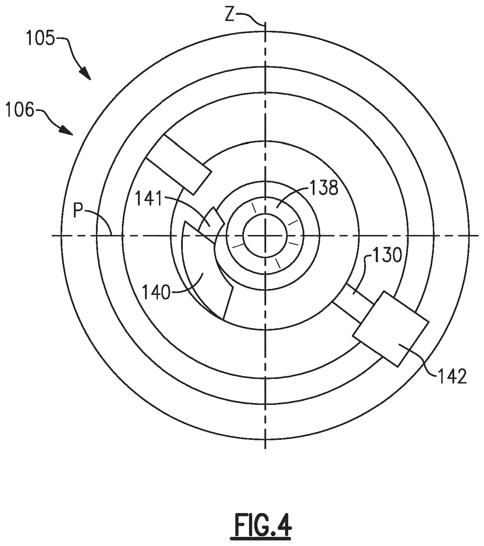

Figure 4 shows repositioning modifications because of the angled mount of the engine mount structure 130. An auxiliary gearbox 140 is shown on an opposed side of a second plane Z from engine mount structure 130. The plane Z is perpendicular to the first plane P. Historically, the auxiliary gear box would be mounted at bottom dead center, or bisected by plane Z. However, the engine mount structure 130 might interfere with this location. As such, as shown, the location of the auxiliary gearbox 140 is rotated to be in an opposed side of the plane Z from the location of the engine mount structure 130. Similarly, the oil tank 141 may also be relocated to that side. A precooler 142 may be positioned on the same side of the plane Z as the engine mount structure 130. The oil tank 141 and gearbox 140 often require maintenance, and thus would not be in the position of the precooler 142. In the illustrated position, the oil tank 141 and gearbox 140 would be accessible. However, precooler 142 typically sees less maintenance, and thus can be in this position.

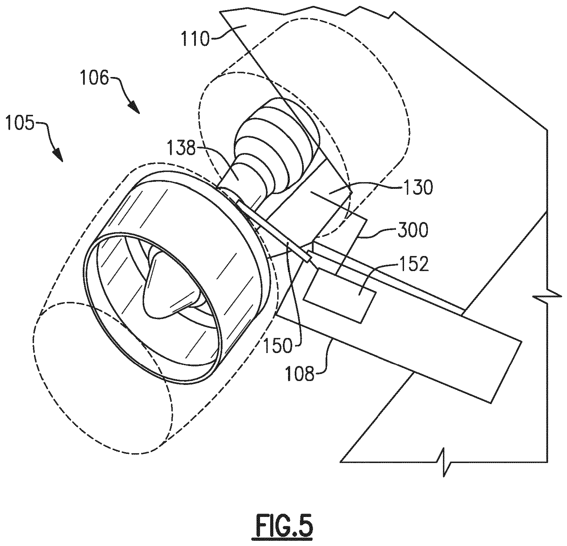

Figure 5 shows yet another feature of an over wing mount, and includes utilizing the straight wing section 108 for positioning engine components. A power take-off 150 extends from the core engine 138 of the engine 105. Shaft may drive a component 152 within the forward space of the straight wing portion 108. Component 152 may include larger generators and motors mounted here to use the extra space. Further, fluid lines 300 are shown schematically, and may communicate back to the engine 105. Further, this space can be utilized for an oil tank, hybrid electric batteries and/or controllers.

The angled engine mount structure further facilitates the placement of these components in the straight wing portion 108. This is true because oil and electric lines must be routed from the core of the engine to the motors and/or tanks, and this would typically be done by routing the lines through a nacelle bifurcation. With a vertical engine mount structure this would require them to be routed down and then over, resulting in longer and more complex connection than with the angled engine mount structure.

A gas turbine engine and engine mount structure could be said to include a core engine housing including a compressor section, a combustor section and a turbine section, a fan. The fan, the compressor section and the turbine section rotate about an axis of rotation. An outer nacelle surrounds the fan, and is spaced from the core engine housing to define a bypass duct. The fan delivers air into the bypass duct and into the core engine housing. The nacelle is formed with camber so as to be curved in a first plane away from the axis of rotation in a first lateral direction, and an engine mount structure extending from the nacelle at an angle that is non-parallel and non-perpendicular to the first plane, and having a component in a lateral direction that is opposed to the first lateral direction

An aircraft could be said to include a fuselage and a pair of wings extending laterally outwardly of the fuselage. The wings include a relatively straight portion between the fuselage and a gas turbine engine, and a swept portion laterally outwardly of said gas turbine engine relative to said fuselage. An engine mount structure attaches the gas turbine engine to the straight portion, and vertically above the wings. The gas turbine has a core engine housing including a compressor section, a combustor section and a turbine section, a fan. The fan, the compressor section and the turbine section rotate about an axis of rotation. An outer nacelle surrounds the fan, and is spaced from the core engine housing to define a bypass duct. The fan delivers air into the bypass duct and into the core housing. The nacelle is formed with camber so as to be curved in a first plane defined parallel to the horizontal and extending through the axis of rotation away from the axis of rotation in a first lateral direction. The engine mount structure extends from the nacelle at an angle that is non-parallel and non-perpendicular to the first plane, and having a component in a lateral direction that is opposed to the first lateral direction.

An embodiment of this disclosure has been described. However, a worker of ordinary skill in this art would recognize that modification would come within the scope of this disclosure. For that reason the following claims should be studied to determine the true scope and content.

## Claims

1. A gas turbine engine and engine mount structure comprising:
a core engine including a compressor section (24), a combustor section (26) and a turbine section (28) mounted within a core engine housing;
an auxiliary gearbox (140) driven by the turbine section (28);
a fan (42), said fan (42), said compressor section (24) and said turbine section (28) rotating about an axis of rotation (X); and
an outer nacelle (106; 106a; 106b) surrounding said fan (42), and being spaced from said core engine housing to define a bypass duct, said fan (42) delivering air into said bypass duct and into said core engine housing, said nacelle (106; 106a; 106b) being formed with camber (122) such that a center point of the nacelle (106; 106a; 106b) extends along a curve in a first plane (P) away from said axis of rotation (X) in a first lateral direction, the first plane (P) being parallel to the horizontal when the engine is mounted on an aircraft and extending through the axis of rotation (X), the engine mount structure (130) extending from said nacelle (106; 106a; 106b) at an angle (A) that is non-parallel and non-perpendicular to said first plane (P), and the engine mount structure (130) extending in a direction, the direction having a component in a lateral direction that is opposed to said first lateral direction, wherein:
a second plane (Z) is defined perpendicular to said first plane (P) and also extends through said axis of rotation (X), and said engine mount structure (130) is on one side of said second plane (Z) and the auxiliary gearbox (140) is positioned on a second side of said second plane (Z).

2. The gas turbine engine (20, 105) and engine mount structure as set forth in claim 1, said engine mount structure (130) extending along the angle (A) away from said axis of rotation (X) defined away from said first plane (P), and said angle (A) being between 30 and 50 degrees.

3. The gas turbine engine and engine mount structure as set forth in claim 1 or 2, said nacelle (106; 106a; 106b) including D-doors (134, 136) which can be pivoted outwardly away from said core housing to provide access to inside said engine.

4. The gas turbine engine and engine mount structure as set forth in claim 3, wherein at least one of said D-doors (134, 136) has an attachment that provides a support for maintenance workers when said D-doors (134, 136) are in an open position.

5. The gas turbine engine and engine mount structure as set forth in any preceding claim, wherein an oil tank (141) is also mounted in said second side.

6. The gas turbine engine and engine mount structure as set forth in any preceding claim, wherein a pre-cooler is provided in a side of said second plane (Z) from which engine mount structure (130) extends.

7. The gas turbine engine and engine mount structure as set forth in any preceding claim, wherein said nacelle (106; 106a; 106b) is formed to be non-perpendicular to said axis of rotation (X) at a trailing edge (120) of said nacelle (106; 106a; 106b).

8. The gas turbine engine and engine mount structure as set forth in any of claims 1 to 6, wherein said nacelle (106; 106a; 106b) is formed to be perpendicular to said axis of rotation (X) at a trailing edge (120) of said nacelle (106; 106a; 106b).

9. An aircraft comprising:
a fuselage (102) and a pair of wings (104) extending laterally outwardly of said fuselage (102), said wings (104) including a relatively straight portion (108) between said fuselage (102) and a gas turbine engine (20, 105), and a swept portion (110) laterally outwardly of said gas turbine engine (20, 105) relative to said fuselage (102); and
the gas turbine engine (20, 105) and engine mount structure (130) as set forth in any preceding claim, the engine mount structure (130) attaching said gas turbine engine (20, 105) to said relatively straight portion (108) and vertically above said wings (104), and said first plane (P) being defined parallel to the horizontal.

10. The aircraft as set forth in claim 9, wherein a first chord (d1) is defined as a chord of said swept portion (110) of said wings (104) immediately laterally outwardly of said nacelle (106; 106a; 106b) on each of said gas turbine engines (20, 105), and a first distance (d2) is defined between a leading edge of said swept portion (110) of said wing (104) and a trailing edge of said nacelle (106; 106a; 106b), and a ratio of said first distance (d2) to said first chord is greater than or equal to 10% and less than or equal to 50%.

11. The aircraft as set forth in claim 9 or 10, wherein a second chord (d3) is defined between a leading edge (205) of said straight portion (108) of said wings (104) and a trailing edge (206) of said straight portion (108) of said wings (104) and a second distance (d4) is defined between said leading edge of said straight portion (108) of said wings (104) and said trailing edge of said nacelle (106; 106a; 106b), and a ratio of said second distance and said second chord is greater than or equal to 5% and less than or equal to 75%.

12. The aircraft as set forth in any of claims 9 to 11, wherein at least one component associated with each of said gas turbine engines (20, 105) are mounted within said straight portion (108) of said wings (104).

13. The aircraft as set forth in claim 12, wherein a drive shaft is driven by said turbine section (28) of said gas turbine engine (20, 105) and drives at least one said component.

14. The aircraft as set forth in claim 12 or 13, wherein said at least component includes at least one of an oil tank (141) and batteries or controllers.

## Patentansprüche

1. Eine Gasturbinentriebwerk- und Triebwerksbefestigungsstruktur, umfassend:
ein Kerntriebwerk, das einen Verdichterabschnitt (24), einen Brennkammerabschnitt (26) und einen Turbinenabschnitt (28) umfasst, die in einem Kerntriebwerksgehäuse montiert sind;
ein von dem Turbinenabschnitt (28) angetriebenes Hilfsgetriebe (140);
einen Lüfter (42), wobei der Lüfter (42), der Verdichterabschnitt (24) und der Turbinenabschnitt (28) um eine Rotationsachse (X) rotieren; und
eine äußere Gondel (106; 106a; 106b), die den Lüfter (42) umgibt und von dem Kerntriebwerksgehäuse beabstandet ist, um einen Bypass-Kanal zu definieren, wobei der Lüfter (42) Luft in den Bypass-Kanal und in das Kerntriebwerksgehäuse liefert, wobei die Gondel (106; 106a; 106b) mit einer Wölbung (122) ausgebildet ist, so dass ein Mittelpunkt der Gondel (106; 106a; 106b) entlang einer Kurve in einer ersten Ebene (P) von der Rotationsachse (X) in einer ersten seitlichen Richtung weg verläuft, wobei die erste Ebene (P) parallel zur Horizontalen ist, wenn das Triebwerk an einem Flugzeug montiert ist, und durch die Rotationsachse (X) verläuft, wobei sich die Triebwerksbefestigungsstruktur (130) von der Gondel (106; 106a; 106b) in einem Winkel (A) erstreckt, der weder parallel noch senkrecht zur ersten Ebene (P) ist, und sich die Triebwerksbefestigungsstruktur (130) in einer Richtung erstreckt, wobei die Richtung eine Komponente in einer seitlichen Richtung hat, die der ersten seitlichen Richtung entgegengesetzt ist, wobei:
eine zweite Ebene (Z) senkrecht zur ersten Ebene (P) definiert ist und ebenfalls durch die Rotationsachse (X) verläuft, und die Triebwerksbefestigungsstruktur (130) sich auf einer Seite der zweiten Ebene (Z) befindet und das Hilfsgetriebe (140) auf einer zweiten Seite der zweiten Ebene (Z) positioniert ist.

2. Das Gasturbinentriebwerk (20, 105) und die Triebwerksbefestigungsstruktur nach Anspruch 1, wobei sich die Triebwerksbefestigungsstruktur (130) entlang des Winkels (A) von der Rotationsachse (X) weg erstreckt, der von der ersten Ebene (P) weg definiert ist, und der Winkel (A) zwischen 30 und 50 Grad beträgt.

3. Das Gasturbinentriebwerk und die Triebwerksbefestigungsstruktur nach Anspruch 1 oder 2, wobei die Gondel (106; 106a; 106b) D-Türen (134, 136) umfasst, die nach außen weg von dem Kerngehäuse geschwenkt werden können, um Zugang zum Inneren des Triebwerks zu gewähren.

4. Das Gasturbinentriebwerk und die Triebwerksbefestigungsstruktur nach Anspruch 3, wobei mindestens eine der D-Türen (134, 136) eine Befestigung aufweist, die eine Stütze für Wartungsarbeiter bietet, wenn sich die D-Türen (134, 136) in einer geöffneten Position befinden.

5. Das Gasturbinentriebwerk und die Triebwerksbefestigungsstruktur nach einem der vorhergehenden Ansprüche, wobei ein Öltank (141) ebenfalls auf der zweiten Seite montiert ist.

6. Das Gasturbinentriebwerk und die Triebwerksbefestigungsstruktur nach einem der vorhergehenden Ansprüche, wobei ein Vorkühler auf einer Seite der zweiten Ebene (Z) vorgesehen ist, von der sich die Triebwerksbefestigungsstruktur (130) erstreckt.

7. Das Gasturbinentriebwerk und die Triebwerksbefestigungsstruktur nach einem der vorhergehenden Ansprüche, wobei die Gondel (106; 106a; 106b) so geformt ist, dass sie an einer Hinterkante (120) der Gondel (106; 106a; 106b) nicht senkrecht zur Rotationsachse (X) steht.

8. Das Gasturbinentriebwerk und die Triebwerksbefestigungsstruktur nach einem der Ansprüche 1 bis 6, wobei die Gondel (106; 106a; 106b) so geformt ist, dass sie an einer Hinterkante (120) der Gondel (106; 106a; 106b) senkrecht zur Rotationsachse (X) steht.

9. Ein Flugzeug, umfassend:
einen Rumpf (102) und ein Paar Flügel (104), die sich seitlich vom Rumpf (102) nach außen erstrecken, wobei die Flügel (104) einen relativ geraden Abschnitt (108) zwischen dem Rumpf (102) und einem Gasturbinentriebwerk (20, 105) und einen gepfeilten Abschnitt (110) seitlich außerhalb des Gasturbinentriebwerks (20, 105) relativ zum Rumpf (102) umfassen; und
das Gasturbinentriebwerk (20, 105) und die Triebwerksbefestigungsstruktur (130) nach einem der vorhergehenden Ansprüche, wobei die Triebwerksbefestigungsstruktur (130) das Gasturbinentriebwerk (20, 105) an dem relativ geraden Abschnitt (108) und vertikal über den Flügeln (104) befestigt, und wobei die erste Ebene (P) parallel zur Horizontalen definiert ist.

10. Das Flugzeug nach Anspruch 9, wobei eine erste Profiltiefe (d1) als eine Profiltiefe des gepfeilten Abschnitts (110) der Flügel (104) unmittelbar seitlich außerhalb der Gondel (106; 106a; 106b) an jedem der Gasturbinentriebwerke (20, 105) definiert ist, und ein erster Abstand (d2) zwischen einer Vorderkante des gepfeilten Abschnitts (110) des Flügels (104) und einer Hinterkante der Gondel (106; 106a; 106b) definiert ist, und ein Verhältnis des ersten Abstands (d2) zur ersten Profiltiefe größer oder gleich 10% und kleiner oder gleich 50% ist.

11. Das Flugzeug nach Anspruch 9 oder 10, wobei eine zweite Profiltiefe (d3) zwischen einer Vorderkante (205) des geraden Abschnitts (108) der Flügel (104) und einer Hinterkante (206) des geraden Abschnitts (108) der Flügel (104) definiert ist und ein zweiter Abstand (d4) zwischen der Vorderkante des geraden Abschnitts (108) der Flügel (104) und der Hinterkante der Gondel (106; 106a; 106b) definiert ist, und ein Verhältnis des zweiten Abstands zur zweiten Profiltiefe größer oder gleich 5% und kleiner oder gleich 75% ist.

12. Das Flugzeug nach einem der Ansprüche 9 bis 11, wobei mindestens eine Komponente, die mit jedem der Gasturbinentriebwerke (20, 105) verbunden ist, innerhalb des geraden Abschnitts (108) der Flügel (104) montiert ist.

13. Das Flugzeug nach Anspruch 12, wobei eine Antriebswelle vom Turbinenabschnitt (28) des Gasturbinentriebwerks (20, 105) angetrieben wird und mindestens eine der Komponenten antreibt.

14. Das Flugzeug nach Anspruch 12 oder 13, wobei die mindestens eine Komponente mindestens einen Öltank (141) und Batterien oder Steuergeräte umfasst.

## Revendications

1. Un moteur à turbine à gaz et une structure de montage de moteur comprenant :
un moteur central comprenant une section de compresseur (24), une section de chambre de combustion (26) et une section de turbine (28) montées à l'intérieur d'un carter de moteur central ;
une boîte de vitesses auxiliaire (140) entraînée par la section de turbine (28) ;
un ventilateur (42), ledit ventilateur (42), ladite section de compresseur (24) et ladite section de turbine (28) tournant autour d'un axe de rotation (X) ; et
une nacelle extérieure (106 ; 106a ; 106b) entourant ledit ventilateur (42), et étant espacée dudit carter de moteur central pour définir un conduit de dérivation, ledit ventilateur (42) délivrant de l'air dans ledit conduit de dérivation et dans ledit carter de moteur central, ladite nacelle (106 ; 106a ; 106b) étant formée avec une cambrure (122) de sorte qu'un point central de la nacelle (106 ; 106a ; 106b) s'étend le long d'une courbe dans un premier plan (P) s'éloignant dudit axe de rotation (X) dans une première direction latérale, le premier plan (P) étant parallèle à l'horizontale lorsque le moteur est monté sur un aéronef et s'étendant à travers l'axe de rotation (X), la structure de montage du moteur (130) s'étendant depuis ladite nacelle (106 ; 106a ; 106b) à un angle (A) qui n'est ni parallèle ni perpendiculaire audit premier plan (P), et la structure de montage du moteur (130) s'étendant dans une direction, la direction ayant une composante dans une direction latérale qui est opposée à ladite première direction latérale, où :
un deuxième plan (Z) est défini perpendiculairement audit premier plan (P) et s'étend également à travers ledit axe de rotation (X), et ladite structure de montage du moteur (130) est d'un côté dudit deuxième plan (Z) et la boîte de vitesses auxiliaire (140) est positionnée d'un deuxième côté dudit deuxième plan (Z).

2. Le moteur à turbine à gaz (20, 105) et la structure de montage du moteur selon la revendication 1, ladite structure de montage du moteur (130) s'étendant le long de l'angle (A) s'éloignant dudit axe de rotation (X) défini à l'écart dudit premier plan (P), et ledit angle (A) étant compris entre 30 et 50 degrés.

3. Le moteur à turbine à gaz et la structure de montage du moteur selon la revendication 1 ou 2, ladite nacelle (106 ; 106a ; 106b) comprenant des portes en D (134, 136) qui peuvent pivoter vers l'extérieur à l'écart dudit carter central pour fournir un accès à l'intérieur dudit moteur.

4. Le moteur à turbine à gaz et la structure de montage du moteur selon la revendication 3, dans lequel au moins l'une desdites portes en D (134, 136) a une fixation qui fournit un support pour les travailleurs de maintenance lorsque lesdites portes en D (134, 136) sont en position ouverte.

5. Le moteur à turbine à gaz et la structure de montage du moteur selon l'une quelconque des revendications précédentes, dans lequel un réservoir d'huile (141) est également monté dans ledit deuxième côté.

6. Le moteur à turbine à gaz et la structure de montage du moteur selon l'une quelconque des revendications précédentes, dans lequel un pré-refroidisseur est prévu dans un côté dudit deuxième plan (Z) à partir duquel la structure de montage du moteur (130) s'étend.

7. Le moteur à turbine à gaz et la structure de montage du moteur selon l'une quelconque des revendications précédentes, dans lequel ladite nacelle (106 ; 106a ; 106b) est formée pour être non perpendiculaire audit axe de rotation (X) au niveau d'un bord de fuite (120) de ladite nacelle (106 ; 106a ; 106b).

8. Le moteur à turbine à gaz et la structure de montage du moteur selon l'une quelconque des revendications 1 à 6, dans lequel ladite nacelle (106 ; 106a ; 106b) est formée pour être perpendiculaire audit axe de rotation (X) au niveau d'un bord de fuite (120) de ladite nacelle (106 ; 106a ; 106b).

9. Un aéronef comprenant :
un fuselage (102) et une paire d'ailes (104) s'étendant latéralement vers l'extérieur dudit fuselage (102), lesdites ailes (104) comprenant une partie relativement droite (108) entre ledit fuselage (102) et un moteur à turbine à gaz (20, 105), et une partie en flèche (110) latéralement vers l'extérieur dudit moteur à turbine à gaz (20, 105) par rapport audit fuselage (102) ; et
le moteur à turbine à gaz (20, 105) et la structure de montage du moteur (130) selon l'une quelconque des revendications précédentes, la structure de montage du moteur (130) fixant ledit moteur à turbine à gaz (20, 105) à ladite partie relativement droite (108) et verticalement au-dessus desdites ailes (104), et ledit premier plan (P) étant défini parallèle à l'horizontale.

10. L'aéronef selon la revendication 9, dans lequel une première corde (d1) est définie comme une corde de ladite partie en flèche (110) desdites ailes (104) immédiatement latéralement vers l'extérieur de ladite nacelle (106 ; 106a ; 106b) sur chacun desdits moteurs à turbine à gaz (20, 105), et une première distance (d2) est définie entre un bord d'attaque de ladite partie en flèche (110) de ladite aile (104) et un bord de fuite de ladite nacelle (106 ; 106a ; 106b), et un rapport de ladite première distance (d2) à ladite première corde est supérieur ou égal à 10 % et inférieur ou égal à 50 %.

11. L'aéronef selon la revendication 9 ou 10, dans lequel une deuxième corde (d3) est définie entre un bord d'attaque (205) de ladite partie droite (108) desdites ailes (104) et un bord de fuite (206) de ladite partie droite (108) desdites ailes (104) et une deuxième distance (d4) est définie entre ledit bord d'attaque de ladite partie droite (108) desdites ailes (104) et ledit bord de fuite de ladite nacelle (106 ; 106a ; 106b), et un rapport de ladite deuxième distance et de ladite deuxième corde est supérieur ou égal à 5 % et inférieur ou égal à 75 %.

12. L'aéronef selon l'une quelconque des revendications 9 à 11, dans lequel au moins un composant associé à chacun desdits moteurs à turbine à gaz (20, 105) est monté à l'intérieur de ladite partie droite (108) desdites ailes (104).

13. L'aéronef selon la revendication 12, dans lequel un arbre d'entraînement est entraîné par ladite section de turbine (28) dudit moteur à turbine à gaz (20, 105) et entraîne au moins un dit composant.

14. L'aéronef selon la revendication 12 ou 13, dans lequel ledit au moins un composant comprend au moins l'un parmi un réservoir d'huile (141) et des batteries ou des contrôleurs.
